# EUROPEAN PATENT SPECIFICATION

(11) **EP 0 467 100 B1**
(45) Date of publication and mention of the grant of the patent: **22.02.1995**
(21) Application number: 91110328.1
(22) Date of filing: 22.06.1991
(51) Int. Cl.: B29C 35/08

(54) **Solid imaging system using incremental photoforming**
Vorrichtung zur Bilderzeugung durch stufenweises Herstellen unter Lichteinfluss
Système de production d'images par formation progressive sous l'influence de la lumière

(30) Priority: 26.06.1990 US 543385
(43) Date of publication of application: 22.01.1992
(73) Proprietor: E.I. DU PONT DE NEMOURS AND COMPANY, Wilmington Delaware 19898 (US)
(72) Inventor: Lawton, John Alan, Landenberg, Pennsylvania 19350 (US); Mickish, Daniel James, Wilmington, Delaware 19803 (US); Keedy, Vincent William, Jr., New Castle, Delaware 19720 (US)
(74) Representative: Werner, Hans-Karsten, Dr.Dipl.-Chem.

(56) References cited:
- WO-A-89/09687

## Description

### 1. Field of the invention

This invention relates to production of three-dimensional objects by photoforming, and more particularly to fabrication of integral three-dimensional objects from a plurality of photoformed sub-portions of successive individual layers of a photoformable composition through a transparent barrier, wherein the barrier is detached from each sub-portion before a new sub-portion is formed.

### 2. Background of the Invention

Many systems for production of three-dimensional modeling by photoforming have been proposed. European Patent Application No. 250,121 filed by Scitex Corporation Ltd., on June 6, 1987, which discloses a three-dimensional modeling apparatus using a solidifiable liquid, and provides a good summary of documents pertinent to this art. U.S. Patent 4,575,330 (C. W. Hull), issued on March 11, 1986, describes a system for generating three-dimensional objects by creating a cross-sectional pattern of the object to be formed at a selected surface of a fluid medium capable of altering its physical state in response to appropriate synergistic stimulation by impinging radiation, particle bombardment or chemical reaction, successive adjacent laminae, representing corresponding successive adjacent cross-sections of the object, being automatically formed and integrated together to provide a step-wise laminar buildup of the desired object, whereby a three-dimensional object is formed and drawn from a substantially planar surface of the fluid medium during the forming process. U.S. Patent 4,752,498 (E. V. Fudim), issued on June 21, 1988, describes an improved method of forming three-dimensional objects, which comprises irradiating an uncured photopolymer by transmitting an effective amount of photopolymer solidifying radiation through a radiation transmitting material which is in contact with the uncured liquid photopolymer. The transmitting material is a material which leaves the irradiated surface capable of further crosslinking so that when a subsequent layer is formed it will adhere thereto. Using this method, multilayer objects can be made.

Publication "Automatic Method for fabricating a three-dimensional plastic model with photohardening polymer" by Hideo Kodama, Rev. Sci. Instrum. 52(11), 1770-1773, Nov. 1981, describes a method for automatic fabrication of a three-dimensional plastic model. The solid model is fabricated by exposing liquid photo-forming polymer to ultraviolet rays, and stacking the cross-sectional solidified layers. Publication "Solid Object Generation" by Alan J. Herbert, Journal of Applied Photographic Engineering, 8(4), 185-188, Aug. 1982, describes an apparatus which can produce a replica of a solid or three-dimensional object much as a photocopier is capable of performing the same task for a two-dimensional object. The apparatus is capable of generating, in photopolymer, simple three-dimensional objects from information stored in computer memory.

A good review of the different methods is also given by a more recent publication, titled "A Review of 3D Solid Object Generation" by A.J. Herbert, Journal of Imaging Technology 15: 186-190 (1989).

Most of these approaches relate to the formation of solid sectors of three-dimensional objects in steps by sequential irradiation of areas or volumes sought to be solidified. Various masking techniques are described as well as the use of direct laser writing, i.e., exposing a photoformable composition with a laser beam according to a desired pattern and building a three-dimensional model layer by layer. In addition to various exposure techniques, several methods of creating thin liquid layers are described which allow both coating a platform or stage initially and coating successive layers previously exposed and solidified.

Current methods of coating suggested thus far, however, have drawbacks in that they are not capable of ensuring flat uniform layer thickness or of producing such layers quickly, or they do not effectively prevent damage or distortion to previously formed layers during the successive coating process and they involve coating only liquid formulations of preferably low viscosity. Furthermore, they omit to recognize very important parameters involved in the coating process such as the effects of having both solid and liquid regions present during the formation of the thin liquid layers, the effects of fluid flow and rheological characteristics of the liquid, the tendency for thin photoformed layers to easily become distorted by fluid flow during coating, and the effects of weak forces such as hydrogen bonds and substantially stronger forces such as mechanical bonds and vacuum or pressure differential forces on those thin layers and on the part being formed.

The Hull patent, for example describes a dipping process where a platform or stage is lowered either one layer thickness or is dipped below the distance of one layer in a vat then brought up to within one layer thickness of the surface of the photoformable liquid. Hull further suggests that low viscosity liquids are preferable, but for other practical reasons, the photoformable liquids are generally high viscosity liquids. Although theoretically most liquids will flatten out eventually, high viscosity liquids and even low viscosity liquids take an inordinate amount of time to flatten to an acceptable degree especially if large flat areas are being imaged and if the liquid layer thickness is very thin. Regions where previous layers consist of solid walls surrounding liquid pools further compounds the flattening process of the thin liquid layer coating. In addition, motion of the platform and parts, which have cantilevered or beam (regions unsupported in the Z direction by previous layer sections), within the liquid creates deflections in the layers, contributing to a lack of tolerance in the finished part.

The Munz patent (U.S. 2,775,758, issued in 1956) and Scitex application describe methods by which the photoformable liquid is introduced into the vat by means of a pump or similar apparatus such that the new liquid level surface forms in one layer thickness over the previously exposed layers. Such methods have all the problems of the Hull methods except that the deflections of the layers during coating is reduced.

The Fudim patent describes the use of a transmitting material, usually rigid and coated or inherently unlikely to adhere to the solidified photopolymer, to fix the surface of the photopolymer liquid to a desired shape, assumably flat, through which photopolymers of desired thickness are solidified. The methods described by Fudim do not address the problems inherent in separating such a transmitting material from a photopolymer formed in intimate contact with the surface of the transmitting material. Whereas the effects of chemical bonding may be reduced significantly by suitable coatings or inherently suitable films, the mechanical bonds along with hydrogen bonds, vacuum forces, and the like are still present and in some cases substantial enough to cause damage or distortion to the photopolymer during removal from the transmitting material surface. Furthermore, evaluations made by the Applicants indicate that the forces, resisting the separation or even sliding off the solidified layer having been exposed in intimate contact with the suitably non-adhesive transmitting material, are capable of damaging the solidified layer, especially when surrounded by photoformable liquid and even more especially when the solidified layers are thin. No method is described in the Fudim patent to eliminate these problems.

The present invention removes these vexing problems by imaging through a transaprent barrier small areas corresponding to sub-portions of full cross-sectional portions of the three-dimensional object, moving the barrier with respect to the stage to destroy the bonds or adhesion between the photoformed sub-portion and the barrier, and continue photoforming new sub-portions in a similar manner until the full cross-sectional portions and finally the object are completed. Breaking of the bonds in individual small areas provides considerably more gentle treatment as compared to breaking the bonds between a photoformed full cross-sectional portion and the barrier. Thus, the present invention provides a method and apparatus for quickly producing layers of a deformable and photoformable composition, which are flat, and with which previously exposed and solidified layers have improved flatness, accuracy and integrity during the process. Preferably, the solidified layers according to this invention have a thickness of less than 0.030".

Deformable compositions are those, which under pressure alone, or under both pressure and temperature take the form of the mold they are in, or the shape of the surfaces they are pressed by. The layer is considered to be solidified when hardened, or polymerized, or crosslinked by the radiation, or even more generally when its viscocity is increased by the radiation, so that higher pressure and/or temperature will be needed for it to be re-deformed, if at all possible. Liquids are the preferred deformable compositions, as they deform by the pressure of their own weight, thus being free flowing.

### 3. Summary of the Invention

The present invention relates to production of three-dimensional objects by photoforming, and more particularly to fabrication of integral three-dimensional objects from a plurality of photoformed sub-portions of successive individual layers of a photoformable composition through a transparent barrier, wherein the barrier is detached from each sub-portion before a new sub-portion is formed.

More particularly, the present invention pertains to an improved method for fabricating an integral three-dimensional object from a multiplicity of cross sectional portions of the object, the cross sectional portions being photoformed sub-portions of successive individual layers of a deformable and photoformable composition included within a vessel containing a stage. The said method comprises:
(a) positioning a transparent barrier within the composition on top of the stage at a distance equal to the thickness of a layer;
(b) exposing imagewise a sub-portion of the composition contained between the barrier and the stage;
(c) moving the transparent barrier with respect to the stage in a way to destroy the adhesion between the barrier and the photoformed sub-portion;
(d) repeating steps (b) and (c) until a cross-sectional portion of the object has been formed;
(e) increasing the distance between the stage and the transparent barrier by the thickness of a layer;
(f) repeating steps (a) through (d) until the integral three-dimensional object is formed.

This invention also pertains to an improved coating station of an apparatus comprising imaging means for fabricating an integral three-dimensional object from a multiplicity of cross sectional portions of the object, the cross sectional portions being photoformed sub-portions of individual layers of a deformable and photoformable composition contained in a vessel having a stage, wherein the improvement comprises:
a transparent barrier located over the stage at a controllable distance from the stage;
moving means for controllably moving the transparent barrier around the stage; and
placement means for controllably varying the distance between the barrier and the stage.

### 4. Description of the Drawing.

The reader's understanding of practical implementation of preferred embodiments of the invention will be enhanced by reference to the following detailed description taken in conjunction with perusal of the drawing figures, wherein:
Figure 1 is a schematic diagram showing the apparatus utilized in the practice of the preferred embodiment of the present invention.
Figure 2 illustrates schematically the components of the coating station of a different embodiment of this invention, wherein the transparent barrier is in the form of a film.
Figure 3 illustrates schematically the components of the coating station of still another embodiment of this invention, wherein the transparent barrier is in an arcuate form.
Figure 4 illustrates schematically the components of the coating station of still a different embodiment of this invention, wherein the transaparent barrier is part of the vessel, and the stage has an elongated cylindrical form.
Figure 5 is a fractional view of another embodiment of this invention, where the transparent barrier is in the form of a cylinder.
Figure 6 is a fractional view of still another embodiment of this invention, where the transparent barrier is in the form of a vacuum activated film.

### 5. Detailed Description of the Invention

This invention relates to a method and apparatus for producing three-dimensional objects by imaging through a transparent barrier small areas corresponding to sub-portions of full cross-sectional portions of the three-dimensional object, moving the barrier to destroy the bonds or adhesion between the photoformed sub-portion and the barrier, and continue photoforming new sub-portions in a similar manner until the full cross-sectional portions and finally the object are completed. Breaking of the bonds in individual small areas provides considerably more gentle treatment as compared to breaking the bonds between a photoformed full cross-sectional portion and the barrier.

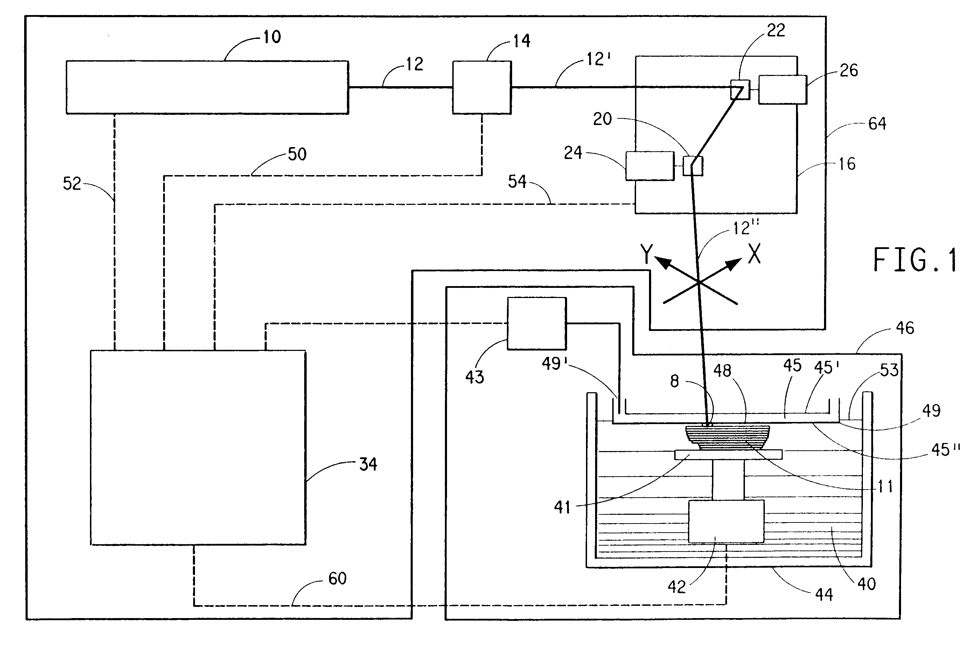

Figure 1 illustrates the preferred embodiment of this invention. There is provided an imaging station or means 64 including a radiation source 10, a modulator 14, a computer 34 and a scanner 16. There is also provided a coating station 46. Radiation means 10, is preferably a laser, producing a radiation beam 12. Being desirable to produce solid objects at high speed, the apparatus of the present invention preferably utilizes relatively high power radiation means 10, such as high power lasers, which may have major bands in the visible, infrared, or ultraviolet regions. High power is considered to be a power greater than 20mW, and preferably over 100 mW as measured from the intensity of radiation beam 12. This is so with the present photospeeds of photoformable compositions. However, as faster compositions become available, the values of 20mW and 100 mW for the beam intensity will become lower accordingly, since photospeed of the composition and intensity of the radiation beam have an inverse relation to each other in order to achieve the same results. The selection of a certain type of laser should be coordinated with the selection of the photoformable composition in a way that the sensitivity of the photoformable composition agrees reasonably well with the wavelength of the laser's emission. Other types of radiation means may also be utilized such as electron beams, x-rays, and the like, as long as their energy type is matched with the sensitivity of the photoformable composition, a beam is provided, and the appropriate conditions for their handling are observed according to established ways, well known in the art. Although means may be provided to modify the shape of the beam cross-section to any desirable shape, the ordinary shape is circular, and the profile of the intensity of the beam is gaussian with a maximum at the center of the circular shape.

The radiation beam 12 passes through modulator 14, the modulator being preferably on acousto-optical modulator. The modulated radiation beam 12' passes in turn through deflection means 16, which comprises two mirrors 20 and 22, each mirror having an axis (not shown), allowing reflection of the beam to surface 53 in X and Y directions, the X and Y directions being perpendicular to each other and parallel to surface 53. The mirrors 20 and 22 may rotatably move around their corresponding axes by means of motors 24 and 26, respectively for controllably deflecting the beam in a vector scanning mode, in the X and Y directions towards predetermined positions of a photoformable composition 40, contained in vessel 44 of the coating station 46. Examples of suitable photoformable compositions are given at a later section of this description. As the beam is deflected by the deflection means 16, it assumes an acceleration from zero level to a maximum acceleration and a velocity from zero level to a maximum constant velocity. The velocity and the intensity of the beam remain proportional to each other, so that the exposure remains substantially constant. The beam exposes imagewise preselected portions of the composition to a substantially constant depth as described below.

For the purposes of this invention, however, the radiation beam 12'' may be not only a focused beam from a laser, but also other light source or light, modified in a number of different ways. For example, it may be transmitted through any type of variable optical density photomask such as a liquid crystal display, silver halide film, electro-deposited mask etc., or reflected off of any variable optical density device, such as a reflective liquid crystal cell.

With respect to the coating station 46 of the preferred embodiment of this invention, there is provided a vessel 44 for containing the photoformable composition 40, and a substantially flat stage 41 disposed within the vessel 44 and within the composition 40.

There is also provided a transparent barrier 45, in the form of a transparent plate in this embodiment, having a first surface 45' and a second surface 45'', the two surfaces being on the opposite sides of the plate. Plate 45, being intended to be operable within the composition 40, is dipped in composition 40 in a way that the first surface 45' is away from the composition, and prevented to be wetted by the composition 40. On the other hand, the second surface 45'' is at least partially in contact with the composition 40. The transparent plate 45 may be any material which is of substantially uniform thickness and flatness, with adequate rigidity to maintain desired flatness while exposures by radiation beam 12'' are being accomplished and is of sufficient transmittance and optical clarity to allow said radiation beam 12'' to transmit through said transparent plate 45 for efficient photohardening or solidification of deformable and preferably liquid layer 48 of photoformable composition 40 under said transparent plate 45. The second surface 45'' should preferably have adequate release characteristics to minimize the adhesion of the photoformed portion to the plate. Examples of suitable materials for use as a transparent plate 47 are flat glass or silica plates coated with release films such as fluorocarbons, silicones and the like, as well as plastic plates such as transparent acrylic or polycarbonate plates similarly treated by well established in the art methods.

There is also provided moving means 43 for controllably moving the transparent barrier 45 relative to the stage 41. The moving means may be any device which may transfer suitable motion to the transparent barrier 45, break the bonds and destroy the adhesion between the barrier and any small photoformed area attached on said barrier. Such motion may be in the form of pulses or other modes of movement capable of destroying said adhesion.

Placement means 42 is used for controllably varying the distance between the stage 41 and the second surface 45'' of plate 45. It is preferable that placement means 42 is controlled by computer 34, and that the stage 41 is moved in a direction normal to the lower planar surface of transparent plate 45. As shown in Figure 1, communication lines 52, 50, 54, 56, and 60 are also provided for computer 34 to control the radiation source 10, the modulator 14, the deflection means 16, the moving means 43, and the placement means 42, respectively.

In operation of the preferred embodiment of this invention, the radiation means 10 shown in Figure 1, provides a radiation beam 12 having an intensity as aforementioned. The radiation beam 12 passes through a modulator 14, where its intensity may be modulated from zero intensity level to a maximum beam intensity having a value less than that of the unmodulated beam intensity, due to energy losses. The modulated radiation beam 12', having somewhat decreased intensity due to losses, passes in turn through deflection means 16 having a two-mirror 20 and 22 assembly, each mirror separately driven by a different motor 24 and 26 respectively. Mirror 20, driven by motor 24 deflects the beam in a X direction, while mirror 22 deflects the beam in a Y direction, X direction being perpendicular to the Y direction. Electrical feedback regarding the relative movements of the mirrors 20 and 22 is provided by the deflection means to computer means 34 through line 54. This feedback, being correlatable to the velocity and average residence time of the beam on the predetermined portions of the thin layer 48, is processed by computer means 34, and it is fed to the modulation means 14 as a control command through line 50 in order to modulate the intensity of the radiation beam, so that the product of the intensity of the beam and the average residence time at each position of the predetermined portions of layer 48 remains substantially constant. Thus, the exposure level, being by definition the product of these two parameters, remains substantially constant. By maintaining the exposure level constant over the predetermined portions of each successive thin layer, the thickness of the layers is also kept substantially constant. This correction or compensation is very important, especially at unsupported portions of the thin layers, where swollen edges will appear as a result of overexposure due to the low initial velocity at the edges in vector scanning. The higher the intensity of the beam 12'' or the higher the photosensitivity of the photoformable composition the more severe this problem becomes in the absence of means to maintain the exposure level constant. Also, the greater the sensitivity of the composition 40, the more severe the problem becomes without some means of exposure control. Such exposure control is also necessary in raster scanning or in systems incorporating overscanned vector schemes, the difference being that the edges of the image may be underexposed due to lack of exposure contribution from adjacent non-exposed regions. In these cases, modulation means are utilized to ensure that the image edges receive substantially the same exposure as non-edge image regions.

In any event, radiation beam 12'', is controllably directed towards photoformable composition 40, which is contained in vessel 44. The transparent barrier in the form of plate 45, having a first surface 45', and a second surface 45'', is located on top of stage 41. The initial distance between the second surface 45'' and the stage is arranged to be substantially equal to the thickness of a layer.

Beam 12'' is directed by computer 34 to expose imagewise part of layer 48 of the photoformable composition 40, which is contained between the transparent barrier 45 and the stage 41. This occurs after beam 12'' passes through surfaces 45' and 45'' of the transparent barrier 45. Thus a sub-portion 8 is photoformed or solidified. It is preferable that each sub-portion corresponds to a single line, such as a scanning line. In the case of Figure 1, such a scanning line may be visualized as one having as cross-section the cross-section of sub-portion 8, and being perpendicular to the plane of Figure 1. In addition, each such photoimaged or photoformed line should be connected with at least another photoimaged line in order to constitute part of the integral three-dimensional object. The sub-portions, when in the form of lines, especially in the case of scanned radiation, should preferably have a common direction along their length and be substantially parallel to each other. In some occasions, it may be desired to have the lines segmented into congregates, where all lines within one congregate are substantially parallel to each other, but the lines from different congregates may have different directions.

The radiation should be high enough to reach the surface of the stage 41, and the release characteristics of the transparent barrier 45 such that the adherence between the photoformed sub-portion 8 and the stage 41 is greater than that between the second surface 45'' of barrier 45 and the photoformed sub-portion 8. Since the radiation is transmitted through the transparent barrier 45, the second surface 45'' will necessarily receive a higher dosage of radiation than the surface of the stage 41. This in most cases will provide higher adhesion of the photoformed sub-portion to the second surface 45'' than to the surface of stage 41, if both surfaces have the same release characteristics. Thus it is important for the second surface 45'' to possess better release characteristics than the surface of stage 41. This may be achieved by coating or treating the transparent barrier with high release materials such as fluorocarbons, silicones, and the like. Of course such materials, if transparent enough in reasonable thickness, may be used as the barrier itself.

When sub-portion 8 is photoformed, moving means 43, also controlled by computer 34, causes transparent barrier 45 to move in a way to destroy the adhesion between the second surface 45'' and sub-portion 8. This motion is preferably translational. In other words, the transparent barrier or plate 45 is forced to slide on a plane parallel to stage 41, at least until the bonds between the second surface 45'' of plate 45 and sub-portion 8 have been broken, and the adhesion destroyed. The translational or sliding motion may be pulsational, which means that plate 45 is forced to move fast until the adhesion has been destroyed, and immediately is again forced to return to its initial position by moving means 43. This motion in most cases does not have to exceed one millimeter in length and it may be completed very fast within a small fraction of a second. The direction of the translational motion should preferably be substantially parallel to the direction of photoimaged or photoformed lines. Better results may be received with this arrangement than when the direction of the translational motion is perpendicular to the direction of the lines. Moving means 43 may also provide different other types of motion or combinations thereof, in place of the translational motion. An example of such a different motion is a withdrawing motion of the transparent barrier 45, having a direction pointing away from the stage 41. The direction may be substantially perpendicular to the stage, or in an angle with the stage, or it may even be changing. The transparent barrier 45, for example, may be pivoted at a first point 49, while a second point 49' may be forced to move up and down by the moving means 43, giving a tilting motion, the direction of which is continuously changing.

After the adhesion between the second surface 45'' and the sub-portion 8 has been destroyed by the motion provided through the moving means 43, a new sub-portion, preferably in the form of a scanned line, is photoformed by radiation exposure provided by laser beam 12''.

The same procedure is followed as described hereinabove, until a full cross-sectional portion of the integral three-dimensional object has been completed.

At this point, placement means 42 moves stage 41 in a direction perpendicular to the planes defined by the surfaces 45' and 45'' of plate 45, in order to increase the distance between the stage and the film 45 by the thickness of a layer. The same cycle is then repeated until the three dimensional object has been completed. Each finished cross-sectional portion serves as a substrate, in a function similar to that of the stage, for the newly photoformed sub-portions of the next cross-sectional portion.

If the photoformable composition comprises plastisol or other thermally coalescible material further thermal treatment, as aforementioned, is in most cases required. In cases where no thermally coalescible materials are present the post treatment in many cases does not offer any drastic advantages.

As already mentioned, the deflection of the two mirrors 20 and 22 connected to motors 24 and 26, and the modulation means 14 are controlled by computer means 34 through control/feedback lines 54 and 50, respectively. The graphic data corresponding to the shape of the solid object under production are also stored in computer means 34. The graphic data stored in computer means 34, after being processed cause motors 24 and 26 to turn and move mirrors 20 and 22 accordingly in order to deflect the radiation beam towards predetermined positions on corresponding to sub-portions such as sub-portion 8. It is preferable that computer 34 also controls and commands the rest of the components through appropriate data fed into the computer so that these components perform timely and accurately their functions by methods well known in the art.

Although this method of coating is not limited relative to layer thickness, it is preferable that layers of less than 1 millimeter be produced.

It has been discovered by the Applicants that photoformable compositions, exposed by radiation means while in intimate contact with a relatively rigid surface, form relatively strong bonds, that cannot be easily overcome by direct pulling of the two surfaces apart or by sliding one surface relative to each other, even though that surface is coated with a suitable rlease material. Polytetrafluoroethylene, PFA, polypropylene, and polyethylene films, which have little or no chemical interaction with the photoformable or photohardened (solidified) composition, and therefore, which should have no adherence to such materials, could not be directly pulled from the surface of the hardened or solidified composition or slid off said surface after exposure in a similar arrangement as shown in figure 1, after photoforming a full cross-sectional portion of the three-dimensional object. However, the Applicants discovered that by following the steps of the present invention, wherein the breaking of the bonds is conducted gradually in small increments, the transparent barrier detatches from the surface with little effort.

The advantages of the Applicants' invention can be more greatly appreciated when it is also considered that the layers of the photohardened or solidified composition are thin and sometimes unsupported other than as cantilevered or beam sections. These thin layers cannot withstand much load, since they have a stiffness that decreases roughly as a function of the unsupported length of the overhang cubed. The process involved in gradually breaking the bonds segment by segment or sub-portion by sub-portion between the surface 45'' of the film and the solidified layer is considerably less stressful on the layers than plain removal of the film, or removal of a relatively rigid plate for that matter, by using other means.

With this process of coating or application of layers, unecessary movements of the stage may be avoided, although the stage may be initially moved by an excessive amount and then returned to the proper position, if so desired. In most cases it is merely necessary to move the stage away from the transparent barrier 45 only by the thickness of one layer after photoformation of each full cross-sectional portion. This increases considerably the speed of production, and in addition it is less damaging or distorting to the layers being made. To assist flow of the photoformable composition during formation of layer 48, the transparent barrier may be translated completely away from the vicinity of the stage or the already photoformed sub-portions, and then returned to its initial position after completion of each full cross-sectional portion.

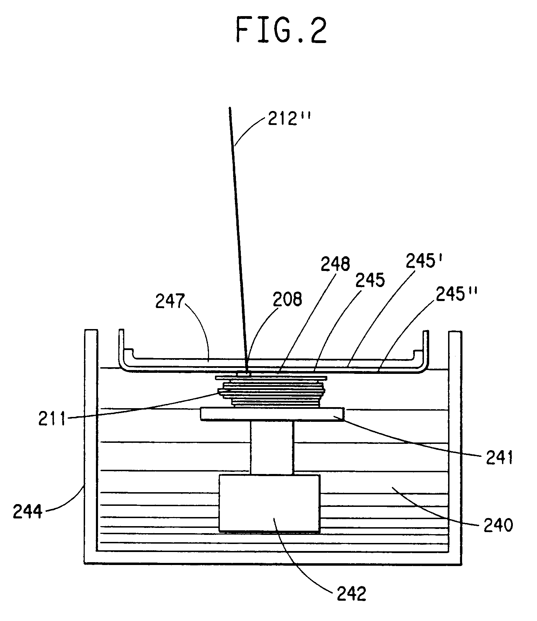

Figure 2 shows a different embodiment of the present invention, wherein the transparent barrier is in the form of a tensioned film 245. Film 245 should have similar release characteristics as those mentioned regarding plate 45 of the embodiment illustrated in Figure 1. Film 245 has also a first surface 245' and a second surface 245'', and it may preferably be supported by a structure 247, which may be in the form of an open frame, or a rigid transparent plate, and the like. A lubricant between surface 245' and structure 247 may be used to allow free sliding of the film over and around the structure 247. In case structure 247 is a transparent plate, optical matching between plate 247 and the first surface 245' of film 245 is desirable. Thus, in addition to the lubricant which is desired between the surfaces of the film and the frame or the film and the plate, it is even more desirable to use a fluid which may play the role of optically matching as well as lubricating said surface. Although most transparant fluids are capable of lubricating and giving a better optical matching than the air-film and air-plate interfaces, silicone oils are the preferred liquids. One example is Laser Liquid™ No 5610 made by R.P. Cargille Laboratories, Inc., Cedar Grove, N.J. 07009. The rest of the elements of this embodiment may be substantially identical to the elements of the embodiment illustrated in Figure 1. They are represented by numerals differing by exactly 200 from the numerals given to denote the elements of the embodiment illustrated in Figure 1.

The operation of this embodiment is also substantially the same as the operation of the embodiment shown in Figure 1, with the exception that the moving means (not shown) causes the film 245 to slide under structure 247 in a translational and/or pulsational manner, in order to destroy the adhesion between the second surface 245'' and the sub-portion 208. The moving means may also be connected to structure 247 and force it along with the film 245 to perform similar movements to the ones described for the embodiment of Figure 1 for the trasparent barrier.

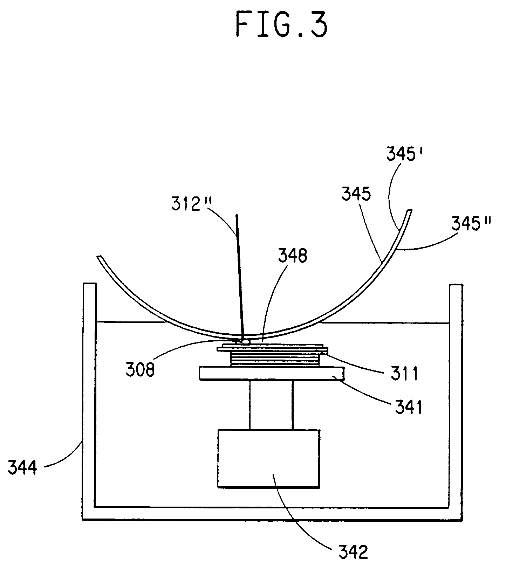

Figure 3 illustrates a different embodiment, wherein the transparent barrier is in an arcuate form 345, also having a first surface 345' and a second surface 345''. The rest of the elements of this embodiment are similar to the elements of the embodiment illustrated in Figure 1. They are represented by numerals differing by exactly 300 from the numerals given to denote the elements of the embodiment illustrated in Figure 1.

The operation of this embodiment is also substantially the same as the operation of the embodiment shown in Figure 1, with the exception that the moving means (not shown) causes the arcuate transparent barrier 345 to move in steps by a rolling motion in order to destroy the adhesion between the second surface 345'' and the sub-portion 308, after sub-portion 308 has been photoformed. The arcuate transparent barrier may roll one step every time a sub-portion is photoformed in preparation for the formation of a new sub-portion, and in order to destroy the adhesion of the previous sub-portion to the second surface 345''. Again, after all sub-portions of one full cross-sectional portion of the three-dimensional object have been photoformed, stage 311 is lowered by the thickness of a layer, and the same procedure is repeated until the three dimensional object is completed.

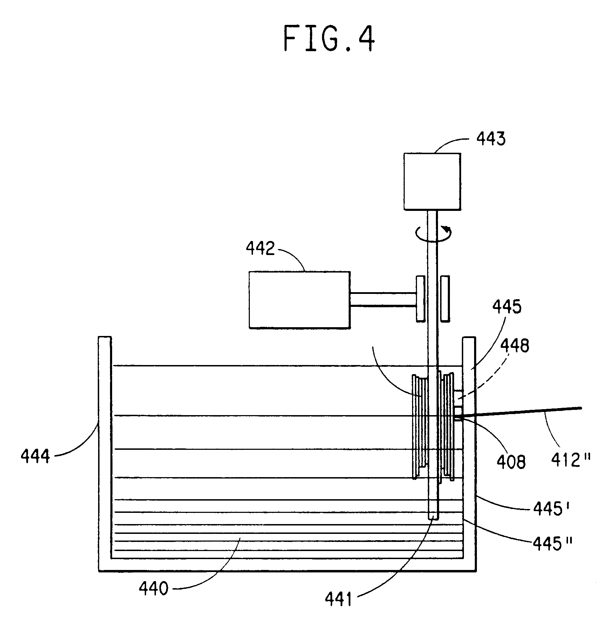

Figure 4 illustrates still in another embodiment of this invention, wherein there is provided vessel 444 for containing the photoformable composition 440. Vessel 444 may be transparent or at least it may have a transparent window 445 playing the role of a transparent barrier, through which a radiation beam, such as a laser beam 412'' may pass substantially freely. Window 445 should preferably be cylindrical in shape with a radius larger than the maximum distance between stage 441 and window 445. Stage 441 is an elongated shaft-like cylindrical body, which may be turned by moving means such as step motor 443. Since for the purposes of this invention the location of the stage and the barrier are important mainly with respect to each other and not with reference to a third irrelevant point, window 445 is still said to be on top of stage 441 in Figure 4. Actually, even if window or barrier 445 were at the bottom 444' of vessel 444 with the stage 441 accordingly positioned within vessel 444, the window would still be said to be on top of stage 441. Finally, placement means 442 is also provided to controllably varry the distance between the window 445 and stage 441.

In operation of this embodiment, beam 412'' is directed to expose imagewise part of layer 448 of the photoformable composition 440, which is contained between the transparent barrier 445 and the stage 441. This occurs after beam 412'' passes through surfaces 445' and 445'' of the transparent barrier 445. Thus, a sub-portion 408 is photoformed or solidified. It is preferable that each sub-portion corresponds to a single line, such as a scanning line. In the case of Figure 4, such a scanning line may be visualized as one running along the height of window or barrier 445. The sub-portions, in the form of lines, especially in the case of scanned radiation, should have a common direction along their length and be substantially parallel to the height of the window and to each other. It is important for the second surface 45'' to possess better release characteristics than the surface of stage 41 in this case also as in the case of the previous embodiments. When sub-portion 8 is photoformed, moving means 443 causes stage 441 to turn in a way to destroy the adhesion between the second surface 445'' and sub-portion 408. This has the same effect if the transparent barrier or window 445 were forced to slide around stage 441 in a circular motion, at least until the bonds between the second surface 445'' of window 445 and sub-portion 408 have been broken, and the adhesion destroyed. The circular or sliding motion is preferably performed in a step by step manner, which means that stage 441 is forced to turn fast until the adhesion has been destroyed, and drop in position ready for a new exposure. Thus, after the adhesion between the second surface 445'' and the sub-portion 408 has been destroyed by the turning motion provided through the moving means or step motor 443, a new sub-portion, preferably in the form of a scanned line again, is photoformed by radiation exposure provided by laser beam 412''.

The same procedure is followed as described hereinabove, until a full cross-sectional portion of the integral three-dimensional object has been completed.

At this point, placement means 442 moves stage 441 in a direction away from window 445, and towards the center axis of a cylinder defined by the curvature of window 445, in order to increase the distance between the stage 441 and window 445 by the thickness of a layer. The same cycle is then repeated until the three dimensional object has been completed.

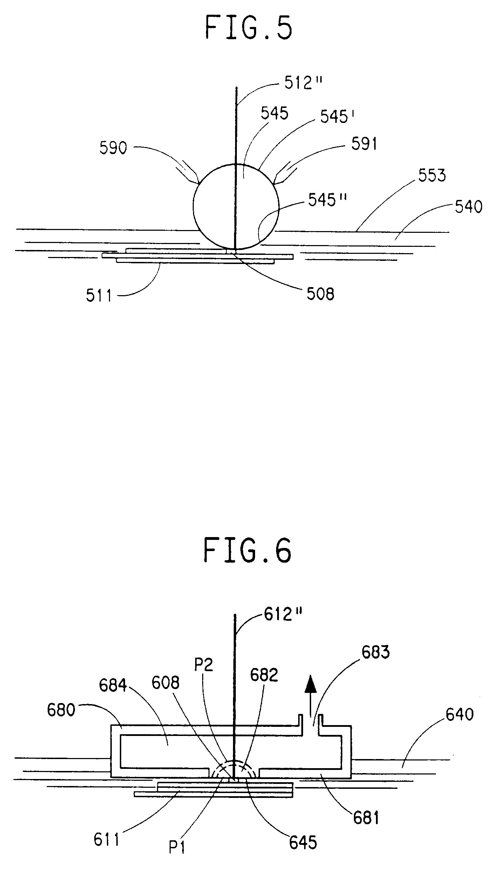

Figure 5 shows a fractional view of another embodiment, wherein the transparent barrier is in the form of a transparent cylinder 545, having a first surface 545' and a second surface 545'', which is in contant with a photohardenable composition 540. There are also provided wipers 590 and 591 for preventing any photohardenable composition to reach the first surface 545'. In operation of this embodiment, a laser beam 512'' passes through the first and the second surfaces of the transparent barrier 545, and photohardens a sub-portion 508 of a cross-sectional section of the three dimensional object. The cylinder is then rolled just adequately to move over and photoharden a new sub-portion adjacent to the previous one. During this rolling action, the adhesion between the transparent barrier 545 and the photohardened portion 508 is destroyed. The rest of the operation is very similar to that of the other embodiments of this invention.

Figure 6 represents a fractional view of still another embodiment, wherein the transparent barrier is in the form of a vacuum activated elastic transparent film 645. The film 645 is attached to the bottom 681 of a vaccum chamber 680, air-tightly sealing an aperture 682 located at the bottom 681 of chamber 680. The chamber also has an opening 683, through which vacuum may be pulled, or air vented back, as desired. The chamber 680 is partially immersed into a photohardenable composition 640. In operation, a laser beam 612'' passes through film 645 and photohardens a sub-portion 608. At this point, the interior 684 of chamber 680 is at atmospheric pressure, or lightly elevated pressure, and the film is in a first position P1, in a substantially planar or slightly convex configuration. After the sub-portion has been photohardened, vacuum is pulled through the opening 683, which causes the film to assume a second position P2 of concave configuration. This results in destroying any adhesion between the film 645 and the photohardened sub-portion 608. After atmospheric or lightly elevated pressure is re-established, the chamber 680 is then to photoharden another sub-portion adjacent to the previously photohardened one, and so on. The rest of the operation is very similar to that of the other embodiments of this invention.

In general, ultrasonic vibration of the transparent barrier may be used to destroy the adhesion of each photoformed sub-portion to the second surface of the transparent barrier.

It is important that when a cantilevered cross-sectional portion is to be made, the respective sub-portions are photoformed in such order that a continuum between the already formed fragment of the object and the sub-portion under photoformation always exists.

It should also be noted at this point that the meaning of the words photohardening, hardening and solidifying in this text denotes transformation of a deformable material to a solid by radiation means. These three words are used interchangeably. Also, as long as a material does not flow under its own weight, it is considered to be a non-liquid.

The photoformable compositions which can be used in the practice of the present invention are any compositions which undergo solidification under exposure. Such compositions comprise usually but not necessarily a photosensitive material and a photoinitiator. The word "photo" is used here to denote not only light, but also any other type of actinic radiation which may transform a deformable composition, and preferably a liquid one to a solidified one by exposure to radiation. Cationic or anionic polymerizations, as well as condensation and free radical polymerizations and combinations thereof are examples of such behavior. Cationic polymerizations are preferable, and free radical polymerizations even more preferable. Photoformable compositions containing thermally coalescible materials, such as plastisols, are of even higher preference.

One or more monomers may be used in the composition. Monomers may be mono-, difunctional, trifunctional or multifunctional acrylates, methacrylates, vinyl, allyl, and the like. They may comprise other functional and/or photosensitive groups , such as epoxy, vinyl, isocyanate, urethane, and like, either by themselves if they are capable of rendering the monomer photoformable, or in addition to acrylates or methacrylates. Examples of suitable ethylenically unsaturated monomers which can be used alone or in combination with other monomers include but are not limited to t-butyl acrylate and methacrylate, 1,5-pentanediol diacrylate and dimethacrylate, N,N-diethylaminoethyl acrylate and methacrylate, ethylene glycol diacrylate and dimethacrylate, 1,4-butanediol diacrylate and dimethacrylate, diethylene glycol diacrylate and dimethacrylate, hexamethylene glycol diacrylate and dimethacrylate, 1,3-propanediol diacrylate and dimethacrylate, decamethylene glycol diacrylate and dimethacrylate, 1,4-cyclohexanediol diacrylate and dimethacrylate, 2,2-dimethylolpropane diacrylate and dimethacrylate, glycerol diacrylate and dimethacrylate, tripropylene glycol diacrylate and dimethacrylate, glycerol triacrylate and trimethacrylate, trimethylolpropane triacrylate and trimethacrylate, pentaerythritol triacrylate and trimethacrylate, polyoxyethylated trimethylolpropane triacrylate and trimethacrylate and similar compounds as disclosed in U.S. Pat. No. 3,380,831, 2,2-di(p-hydroxyphenyl)-propane diacrylate, pentaerythritol tetraacrylate and tetramethacrylate, 2,2-di-(p-hydroxyphenyl)-propane dimethacrylate, triethylene glycol diacrylate, polyoxyethyl-2,2-di(p-hydroxyphenyl)propane dimethacrylate, di-(3-methacryloxy-2-hydroxypropyl) ether of bisphenol-A, di-(2-methacryloxyethyl) ether of bisphenol-A, di-(3-acryloxy-2-hydroxypropyl) ether of bisphenol-A, di-(2-acryloxyethyl) ether of bisphenol-A, di-(3-methacryloxy-2-hydroxypropyl) ether of 1,4-butanediol, triethylene glycol dimethacrylate, polyoxypropyltrimethylol propane triacrylate, butylene glycol diacrylate and dimethacrylate, 1,2,4-butanetriol triacrylate and trimethacrylate, 2,2,4-trimethyl-1,3-pentanediol diacrylate and dimethacrylate, 1-phenyl ethylene-1,2-dimethacrylate, diallyl fumarate, styrene, 1,4-benzenediol dimethacrylate, 1,4-diisopropenyl benzene, and 1,3,5-triisopropenyl benzene. Also useful are ethylenically unsaturated compounds having a molecular weight of at least 300, e.g., alkylene or a polyalkylene glycol diacrylate prepared from an alkylene glycol of 2 to 15 carbons or a polyalkylene ether glycol of 1 to 10 ether linkages, and those disclosed in U.S. Pat. No. 2,927,022, e.g., those having a plurality of addition polymerizable ethylenic linkages particularly when present as terminal linkages. Also included are all methacrylates, tetrahydro- furfuryl methacrylate, cyclohexyl methacrylate, diallylfumarate, n-benzylacrylate, carbowax 550 acrylate, methyl cellosolve acrylate, dicyclopentenyl acrylate, isodecyl acrylate, 2(2-ethoxyethoxy) ethylacrylate, poybutadiene diacrylate, tris (2-hydroxyethyl) iso cyanurate triacrylate, epoxy diacrylate tetrabromo bisphenol A diacrylate. Monomers with vinyl group like vinyl pyrol, N-vinyl pyrrolidone and vinyl ethers are usable. Also, oligomers with mono or multifunctional groups such as the ones with carbon group for alkali removability, and the ones with both acrylate and isocyanate end groups are useful. Particularly preferred monomers are polyoxyethylated trimethylolpropane triacrylate, ethylated pentaerythritol triacrylate, dipentaerythritol monohydroxypentaacrylate and 1,10-decanediol dimethylacrylate. Others are caprolactone acrylates and methacrylates, propoxylated neopentyl glycol diacrylates and methacrylates.

Di-(3-acryloxy-2-hydroxypropyl) ether of bisphenol A and Di-(3-methacryloxy-2-hydroxypropyl) ether of bisphenol A oligomers, generally referred to as unsaturated bisphenol A oligomers are of particular interest because they provide higher photospeed; also urethane diacrylates and methacrylates with aliphatic or aromatic backbones, referred to as unsaturated urethane oligomers are of particular interest, because they provide both higher photospeed and higher flexibility.

Monomers which expand on polymerization can be used in part with the standard monomers to achieve compositions giving no shrinkage or warpage upon exposure. These monomers are based on polycyclic ring opening mechanisms. Spiro orthocarbonates, spiroorthoesters and bicyclic ortho esters are known to belong to this class. Typical monomers are norborene spiro orthocarbonate, and bismethylene spiro orthocarbonate. Monomers which undergo cationic polymerization are also useful in this invention. Representative classes of monomers are cyclic ethers cyclic formals and acetals, lactones, vinyl monomers, sulfur containing monomers, organosilicone monomers, monofunctional epoxies, difunctional epoxies, epoxy prepolymers and higher oligomers and epoxy end-capped silicone resins. They can be found in the open literature. One such reference is "Photoinitiated cationic polymerization" by James V. Crivello in "UV Curing: Science and Technology" edited by S. P. Pappas, published by Technology Marketing Corporation, 1978. Other ring opening monomers can be found in "Ring Opening Polymerization" Edited by K.J. Ivin and T. Saegusa, Elsevier Applied Science Publishers, London and New York, 1984.

Examples of photoinitiators which are useful in the present invention alone or in combination are described in U.S. Pat. No. 2,760,863 and include vicinal ketaldonyl alcohols such as benzoin, pivaloin, acyloin ethers, e.g., benzoin methyl and ethyl ethers, benzil dimethyl ketal; a-hydrocarbon-substituted aromatic acyloins, including a-methylbenzoin a-allylbenzoin and a-phenylbenzoin, others are 1-hydroxycyclobenyl phenol ketone, diethoxyphenol acetophenone, 2-methyl-1-[4-(methyl thio)phenyl], 2-morpholino-propane-1, benzophenone, michler's ketone, substituted triphenyl imidazolyl dimers with chain transfer agent camphoquinone etc. Photoreducible dyes and reducing agents disclosed in U.S. Pat. Nos. 2,850,445, 2,875,047, 3,097,096, 3,074,974, 3,097,097 and 3,145,104, as well as dyes of the phenazine, oxazine, and quinone classes, Michler's ketone, benzophenone, acryloxy benzophenone, 2,4,5-triphenylimidazolyl dimers with hydrogen donors including leuco dyes and mixtures thereof as described in U.S. Pat. Nos. 3,427,161, 3,479,185 and 3,549,367 can be used as initiators. Also useful with photoinitiators and photoinhibitors are sensitizers disclosed in U.S. Pat No. 4,162,162. The photoinitiator or photoinitiator system is present in 0.05 to 10% by weight based on the total weight of the photoformable composition. Other suitable photoinitiation systems which are thermally inactive but which generate free radicals upon exposure to actinic light at or below 185 oC include the substituted or unsubstituted polynuclear quinones which are compounds having two intracyclic carbon atoms in a conjugated carbocyclic ring system, e.g., 9,10-anthraquinone, 2methylanthraquinone, 2-ethylanthraquinone, 2 -tert-butylanthraquinone, octamethylanthraquinone, 1,4-naphthoquinone, 9,10-phenanthraquinone, benz(a)anthracene-7,12-dione, 2,3-naphthacene-5,12-dione, 2-methyl-1,4-naphthoquinone, 1,4-dimethyl-anthraquinone, 2,3-dimethylanthraquinone, 2-phenylanthraquinone, 2,3-diphenylanthraquinone, retenequinone, 7,8,9,10-tetrahydronaphthacene-5,12-dione, and 1,2,3,4-tetrahydrobenz(a)anthracene-7,12-dione. Also, alpha amino aromatic ketones, halogenated compounds like Trichloromethyl substituted cyclohexadienones and triazines or chlorinated acetophenone derivatives, thioxanthones in presences or tertiary amines, and titanocenes.

Typical classes of initiators for cationic polymerization are aryldiazonium salts, diaryliodonium salts comprising nonnucleophilic counterions such as SbF6-, BF₄-, PF₆-, ClO₄-, CF₃SO₃-, AsF₆-, triacylsulfonium salts, triarylselenium salts or Iron arene complex. Examples of these include but are not limited to 2,5-diethoxy -4-(p-tolylmercapto) benzene diazonium PF6-, 4- dimethylamine -naphthalene diazonium PF6-, diphenyliodonium hexafluoroarsenate, di-t-butyldiphenyliodonium hexaflurophosphate FX-512 sulfonium salt (by 3M Company), triethylsulfonium iodide, CG24-61 (by Ciba Geigy).
One good reference book is Photoinitiation of Cationic Polymerization mentioned earlier.

Sensitizers useful with these photoinitiators for radical polymerization include but are not limited to methylene blue and those disclosed in U.S. Patents 3,554,753; 3,563,750; 3,563,751; 3,647,467; 3,652,275; 4,162,162; 4,268,667; 4,351,893; 4,454,218; 4,535,052; and 4,565,769. A preferred group of sensitizers include the bis(p-dialkylaminobenzylidine) ketones disclosed in Baum et al., U.S. Patent 3,652,275 and the arylyidene aryl ketones disclosed in Dueber, U.S. Patent 4,162,162, as well as in U.S. Patents 4,268,667 and 4,351,893. Useful sensitizers are also listed in Dueber, U.S. Patent 4,162,162 column 6, line 1 to line 65. Particularly preferred sensitizers include the following: DBC, i.e., cyclopentanone; 2,5-bis-[4-(diethylamino)-2-methylphenyl]methylene]-; DEAW, i.e., cyclopentanone, 2,5-bis[4-(diethylamino)phenyl]methylene]-; dimethoxy-JDI, i.e.,1H-inden-1-one, 2,3-dihydro-5,6-dimethoxy-2-[(2,3,6,7-tetrahydro-1H,5H-benzo[i,j]quinolizin-9-yl)methylene]-, and JAW, i.e., cyclopentanone, 2,5-bis[(2,3,6,7-tetrahydro-1H,5H-b-enzo[i,j]quinolizin-1-yl)methylene]-. Also useful are cyclopentanone 2,5-bis[2-(1,3-dihydro-1,3,3-trimethyl-2H-indol-2-ylidene)ethylidene], CAS 27713-85-5; and cyclopentanone, 2,5-bis-[2-ethylnaphtho[1,2-d]thiazol-2(1H)-ylidene)ethylidene], CAS 27714-25-6.

Sensitizers for cationic polymerization include but are not limited to perylene, acridine orange, acridine yellow, phosphene R, benzoflavin & Setoflavin T.

Hydrogen donor compounds useful as chain transfer agents in the photopolymer compositions include: 2-mercaptobenzoxazole, 2-mercapto-benzothiazole, 4-methyl-4H-1,2,4,triazole-3-thiol, and the like; as well as various types of compounds, e.g., (a) ethers, (b) esters, (c) alcohols, (d) compounds containing allylic or benzylic hydrogen cumene, (e) acetals, (f) aldehydes, and (g) amides as disclosed in column 12, lines 18 to 58 of MacLachlan, U.S. Patent 3,390,996

Other components may also be present in the photoformable compositions, e.g., dyes, pigments, extenders, organic or inorganic fillers, organic or inorganic reinforcement fibers, polymerization inhibitors, thermal stabilizers, viscosity modifiers, interlayer and generally interfacial adhesion promoters, such as organosilane coupling agents, coating aids, etc., so long as the photoformable compositions retain their essential properties.

Although the Applicants have herein disclosed specific preferred embodiments of the instant invention, the general scope of this invention is limited only by the appended claims and their equivalents.

## Claims

1. A method for fabricating an integral three-dimensional object from a multiplicity of cross sectional portions of the object, the cross sectional portions being photoformed sub-portions of successive individual layers of a deformable and photoformable composition included within a vessel containing a stage, the said method comprising:
(a) positioning a transparent barrier within the composition on top of the stage at a distance equal to the thickness of a layer;
(b) exposing imagewise a sub-portion of the composition contained between the barrier and the stage;
(c) moving the transparent barrier with respect to the stage in a way to destroy the adhesion between the barrier and the photoformed sub-portion;
(d) repeating steps (b) and (c) until a cross-sectional portion of the object has been formed;
(e) increasing the distance between the stage and the transparent barrier by the thickness of a layer;
(f) repeating steps (a) through (d) until the integral three-dimensional object is formed.

2. A method as defined in claim 1, wherein each photoformed sub-portion corresponds to a single photoimaged line, each photoimaged line being connected with at least another photoimaged line, all photoimaged lines having a common direction and being parallel to each other.

3. A method as defined in claim 2, wherein the barrier has two surfaces being opposite to each other, flat, and parallel to the stage.

4. A method as defined in claim 3, wherein step (c) is preformed by a tanslational motion of the transparent barrier, the translational motion having a direction parallel to the stage.

5. A method as defined in claim 4, wherein the direction of the translational motion is also parallel to the common direction of the photoimaged lines.

6. A method as defined in claim 4, wherein the translational motion is pulsational.

7. A method as defined in claim 3, wherein step (c) is performed by a withdrawing motion of the transparent barrier, the withdrawing motion having a direction pointing away from the stage.

8. A method as defined in claim 7, wherein the withdrawing motion is pulsational.

9. A method as defined in claim 7, wherein the direction of the withdrawing motion is substantially perpendicular to the stage.

10. A method as defined in claim 2, wherein the transparent barrier has an arcuate shape.

11. A method as defined in claim 10, wherein step (c) is preformed by a rolling motion of the transparent barrier.

12. A method as defined in claim 11, wherein the rolling motion has a direction parallel to the common direction of the photoimaged lines.

13. A method as defined in claim 2, wherein the radiation is in the form of a laser beam.

14. A method as defined in claim 2, wherein the radiation is modified by a variable optical density photomask.

15. A method as defined in claim 2, wherein the photoformable composition comprises plastisol.

16. In a coating station of an apparatus comprising imaging means for fabricating an integral three-dimensional object from a multiplicity of cross sectional portions of the object, the cross sectional portions being photoformed sub-portions of individual layers of a deformable and photoformable composition contained in a vessel having a stage, wherein the improvement comprises:
a transparent barrier located over the stage at a controllable distance from the stage;
moving means for controllably moving the transparent barrier around the stage; and
placement means for controllably varying the distance between the barrier and the stage.

17. An apparatus as defined in claim 16, wherein the imaging means comprises:
radiation means for providing a radiation beam, the radiation beam having an intensity;
deflection means for controllably deflecting the radiation beam;
modulation means positioned between the radiation means and the deflection means for modulating the intensity of the radiation beam; and
computer means for storing graphic data corresponding to the shape of the rigid object, the computer means being also coupled to the modulation means, the deflection means, the moving means and the placement means, in order to control said modulation means, deflection means tensioning means, and placement means according to the graphic data.

18. An apparatus as defined in claim 17, wherein the radiation beam comprises a laser beam.

19. An apparatus as defined in claim 17, wherein the radiation is modified by a variable optical density photomask.

20. An apparatus as defined in claim 16, wherein the photoformable composition comprises plastisol.

21. A method for fabricating an integral three-dimensional object from a multiplicity of cross sectional portions of the object, the cross sectional portions being photoformed sub-portions of successive individual layers of a deformable and photoformable composition, comprising the steps of:
(a) placing the composition in a vessel containing a stage;
(b) positioning within the composition on top of the stage at a distance equal to the thickness of a layer, a transparent barrier having a first and a second surface, the first surface being opposite to the second surface, the first surface being disposed in a way to prevent wetting of said first surface by the composition, and at least part of the second surface being disposed in a way to be in contact with the composition;
(c) exposing imagewise part of a layer of the photoformable composition contained between the transparent barrier and the stage to radiation through the part of the surface of the transparent barrier being in contact with the photoformable composition, in order to photoform a sub-portion, with the requirement that the radiation is high enough, and the release characteristics of the transparent barrier such that the adherence between the photoformed sub-portion and the stage is greater than that between the second surface of the barrier and the photoformed sub-portion;
(d) moving the transparent barrier with respect to the stage in a way to destroy the adhesion between the second surface of the barrier and the photoformed sub-portion;
(e) repeating steps (c) and (d) until a cross-sectional portion of the object has been formed;
(f) increasing the distance between the stage and the transparent barrier by the thickness of a layer;
(g) causing the photoformable composition to flow over the photoformed layer in order to form a new layer of deformable composition;
(h) exposing imagewise part of the new layer of the composition contained between the transparent barrier and the previously exposed cross sectional portion to radiation through the surface of the transparent barrier being in contact with the photoformable composition, in order to photoform a new sub-portion, with the requirement that the radiation is high enough, and the release characteristics of the transparent barrier such that the adherence between the newly photoformed sub-portion and the previously made cross sectional portion is greater than that between the film and the newly photoformed sub-portion;
(i) moving the transparent barrier in a way to destroy the adhesion between the second surface of the barrier and the newly photoformed sub-portion;
(j) repeating steps (h) and (i) until a cross-sectional portion of the object has been formed;
(k) increasing the distance between the stage and the transparent barrier by the thickness of a layer;
(l) causing the photoformable composition to flow over the photoformed layer in order to form a new layer of deformable composition; and
(m) repeating steps (h) through (l) until the integral three-dimensional object is formed.

22. A method as defined in claim 21, wherein each photoformed sub-portion corresponds to a single photoimaged line, each photoimaged line being connected with at least another photoimaged line, all photoimaged lines having a common direction and being parallel to each other.

23. A method as defined in claim 22, wherein the surfaces of the transparent barrier are flat and parallel to the stage.

24. A method as defined in claim 23, wherein steps (d) and (i) are preformed by a tanslational motion of the transparent barrier, the translational motion having a direction parallel to the stage.

25. A method as defined in claim 24, wherein the direction of the translational motion is also parallel to the common direction of the photoimaged lines.

26. A method as defined in claim 24, wherein the translational motion is pulsational.

27. A method as defined in claim 23, wherein steps (d) and (i) are performed by a withdrawing motion of the transparent barrier, the withdrawing motion having a direction pointing away from the stage.

28. A method as defined in claim 27, wherein the withdrawing motion is pulsational.

29. A method as defined in claim 27, wherein the direction of the withdrawing motion is substantially perpendicular to the stage.

30. A method as defined in claim 22, wherein the transparent barrier has an arcuate shape.

31. A method as defined in claim 30, wherein steps (d) and (i) are preformed by a rolling motion of the transparent barrier.

32. A method as defined in claim 31, wherein the rolling motion has a direction parallel to the common direction of the photoimaged lines.

33. A method as defined in claim 22, wherein the radiation is in the form of a laser beam.

34. A method as defined in claim 2, wherein the radiation is modified by a variable optical density photomask.

35. A method as defined in claim 22, wherein the photoformable composition comprises plastisol.

36. An apparatus for fabricating an integral three-dimensional object from a multiplicity of cross sectional portions of the object, the cross sectional portions being photoformed sub-portions of individual layers of a deformable and photoformable composition, comprising:
imaging means for imagewise exposing to radiation each of the sub-portions of the photoformable composition; and
a coating station comprising,
a vessel for containing the composition;
a stage disposed within the vessel;
a transparent barrier located over the stage at a distance equal to the thickness of a layer, the barrier having a first and a second surface, the first surface being opposite to the second surface, the barrier intended to be operable within the composition in a manner preventing wetting of the first surface by the composition, and allowing at least part of the second surface to be in contact with the composition;
moving means for controllably moving the transparent barrier relative to the stage; and
placement means for controllably varying the distance between the second surface of the barrier and the stage in order to allow the individual layers of the photoformable composition to be formed under said second surface and be photoformed by the imagewise exposure of the sub-portions to radiation provided by the imaging means.

37. An apparatus as defined in claim 36, wherein the imaging means comprises:
radiation means for providing a radiation beam, the radiation beam having an intensity;
deflection means for controllably deflecting the radiation beam;
modulation means positioned between the radiation means and the deflection means for modulating the intensity of the radiation beam; and
computer means for storing graphic data corresponding to the shape of the rigid object, the computer means being also coupled to the modulation means, the deflection means, the moving means and the placement means, in order to control said modulation means, deflection means tensioning means, and placement means according to the graphic data.

38. An apparatus as defined in claim 37, wherein the radiation beam comprises a laser beam.

39. An apparatus as defined in claim 37, wherein the radiation is modified by a variable optical density photomask.

40. An apparatus as defined in claim 36, wherein the photoformable composition comprises plastisol.

## Patentansprüche

1. Verfahren zur Herstellung eines integralen dreidimensionalen Gegenstandes aus einer Vielzahl von Querschnittsteilen des Gegenstandes, wobei die Querschnittsteile photogeformte Unter-Teile aufeinanderfolgender einzelner Schichten einer verformbaren und photoformbaren Zusammensetzung sind, die in einem eine Platte enthaltenden Behälter enthalten ist, wobei das Verfahren umfaßt:
(a) Positionieren einer transparenten Sperrschicht innerhalb der Zusammensetzung auf dem Oberteil der Platte in einem der Dicke einer Schicht entsprechenden Abstand.
(b) bildweises Belichten eines Unter-Teils der Zusammensetzung, das sich zwischen der Sperrschicht und der Platte befindet;
(c) Bewegen der transparenten Sperrschicht in Bezug auf die Platte auf eine Weise, durch die die Adhäsion zwischen der Sperrschicht und dem photogeformten Unter-Teil zerstört wird;
(d) Wiederholen der Schritte (b) und (c), bis ein Querschnittsteil des Gegenstandes gebildet worden ist;
(e) Vergrößern des Abstandes zwischen der Platte und der transparenten Sperrschicht um die Dicke einer Schicht;
(f) Wiederholen der Schritte (a) bis (d), bis ein integraler dreidimensionaler Gegenstand geformt worden ist.

2. Verfahren nach Anspruch 1, wobei jedes photogeformte Unter-Teil einer einzigen photoabgebildeten Linie entspricht, jede photoabgebildete Linie mit wenigstens einer anderen photoabgebildeten Linie verbunden ist, alle photoabgebildeten Linien eine gemeinsame Richtung haben und parallel zueinander liegen.

3. Verfahren nach Anspruch 2, wobei die Trennschicht zwei Oberflächen aufweist, die sich gegenüberliegen, die eben und parallel zur Platte sind.

4. Verfahren nach Anspruch 3, worin Schritt (c) durch eine translatorische Bewegung der transparenten Trennschicht durchgeführt wird, wobei die translatorische Bewegung eine Richtung parallel zur Platte aufweist.

5. Verfahren nach Anspruch 4, wobei die Richtung der tranlatorischen Bewegung darüber hinaus parallel zur allgemeinen Richtung der photobelichteten Linien ist.

6. Verfahren nach Anspruch 4, wobei die translatorische Bewegung pulsierend ist.

7. Verfahren nach Anspruch 3, wobei Schritt (c) durch eine zurückziehende Bewegung der transparenten Sperrschicht durchgeführt wird, wobei die zurückziehende Bewegung eine von der Platte wegzeigende Richtung hat.

8. Verfahren nach Anspruch 7, wobei die zurückziehende Bewegung pulsierend ist.

9. Verfahren nach Anspruch 7, wobei die Richtung der zurückziehenden Bewegung im wesentlichen senkrecht zur Platte ist.

10. Verfahren nach Anspruch 2, wobei die transparente Trennschicht eine gekrümmte Form aufweist.

11. Verfahren nach Anspruch 10, wobei Schritt (c) durch eine rollende Bewegung der transparenten Trennschicht durchgeführt wird.

12. Verfahren nach Anspruch 11, wobei die rollende Bewegung eine Richtung parallel zur allgemeinen Richtung der photobelichteten Linien hat.

13. Verfahren nach Anspruch 2, wobei die Strahlung in Form eines Laserstrahls vorliegt.

14. Verfahren nach Anspruch 2, wobei die Strahlung durch eine Photomaske veränderlicher optischer Dichte modifiziert wird.

15. Verfahren nach Anspruch 2, wobei die photoformbare Zusammensetzung Plastisol umfaßt.

16. Beschichtungsstation einer Vorrichtung, umfassend Abbildungsmittel zur Herstellung eines integralen dreidimensionalen Gegenstandes aus einer Vielzahl von Querschnittsteilen des Gegenstandes, wobei die Querschnittsteile photogeformte Unter-Teile einzelner Schichten einer verformbaren und photoformbaren Zusammensetzung sind, die in einem Behälter mit einer Platte enthalten sind, wobei die Verbesserung umfaßt:
eine transparente Trennschicht, angeordnet über der Platte mit einem kontrollierbaren Abstand von der Platte;
Mittel zur Bewegung, um die transparente Trennschicht kontrollierbar um die Platte bewegen zu können, und
Mittel zur Einstellung, um den Abstand zwischen der Trennschicht und der Platte kontrollierbar verändern zu können.

17. Vorrichtung nach Anspruch 16, wobei die Abbildungsmittel umfassen:
Mittel zur Bestrahlung, um einen Bestrahlungs-Strahl zu erzeugen, wobei der Bestrahlungs-Strahl eine Intensität aufweist;
Mittel zur Ablenkung, um den Bestrahlungs-Strahl kontrollierbar abzulenken;
Mittel zur Modulation, angeordnet zwischen dem Mittel zur Bestrahlung und dem Mittel zur Ablenkung, um die Intensität des Bestrahlungs-Strahls zu modulieren; und
Mittel zum Rechnen, um der Form des starren Gegenstandes entsprechende grafische Daten zu speichern, wobei das Mittel zum Rechnen auch mit dem Mittel zur Modulation, dem Mittel zur Ablenkung, dem Mittel zur Bewegung und dem Mittel zur Einstellung gekoppelt ist, um das Mittel zur Moduiation, das Mittel zur Ablenkung, das Mittel zum Spannen und das Mittel zur Einstellung in Einklang mit den grafischen Daten zu steuern.

18. Vorrichtung nach Anspruch 17, wobei der Bestrahlungs-Strahl einen Laserstrahl umfaßt.

19. Vorrichtung nach Anspruch 17, wobei die Strahlung durch eine Photoschablone variabler optischer Dichte verändert ist.

20. Apparat nach Anspruch 16, wobei die photoformbare Zusammensetzung Plastisol umfaßt.

21. Verfahren zur Herstellung eines integralen dreidimensionalen Gegenstandes aus einer Vielzahl von Querschnittsteilen des Gegenstandes, wobei die Querschnittsteile photogeformte Unter-Teile aufeinanderfolgender einzelner Schichten einer verformbaren und photoformbaren Zusammensetzung sind, umfassend die Schritte des:
(a) Einbringens der Zusammensetzung in ein eine Platte enthaltenden Behälter;
(b) Anordnens einer transparenten Trennschicht mit einer ersten und einer zweiten Oberfläche, wobei die erste Oberfläche der zweiten Oberfläche gegenüber liegt, wobei die erste Oberfläche auf eine Art so angeordnet ist, die das Benetzen der ersten Oberfläche durch die Zusammensetzung verhindert und wobei wenigstens ein Teil der zweiten Oberfläche auf eine Weise so angeordnet ist, daß sie in Kontakt mit der Zusammensetzung steht, innerhalb der Zusammensetzung auf dem Oberteil der Platte mit einem der Dicke einer Schicht entsprechenden Abstand;
(c) Bildweisen Einwirkens von Strahlung auf einen zwischen der transparenten Trennschicht und der Platte enthaltenen Teil der Schicht der photoformbaren Zusammensetzung durch den Teil der Oberfläche der transparenten Trennschicht, der in Kontakt mit der photoformbaren Zusammensetzung steht, um einen Unter-Teil photozuformen, mit der Anforderung, daß die Strahlung stark genug ist und die Ablöse-Eigenschaften der transparenten Trennschicht so beschaffen sind, daß das Haftvermögen zwischen dem photogeformten Unter-Teil und der Platte größer als zwischen der zweiten Oberfläche der Trennschicht und dem photogeformten Unter-Teil ist;
(d) Bewegens der transparenten Trennschicht mit Bezug auf die Platte auf eine Weise, auf die die Adhäsion zwischen der zweiten Oberfläche der Trennschicht und dem photogeformten Unter-Teil zerstört wird;
(e) Wiederholens der Schritte (c) und (d), bis ein Querschnittsteil des Gegenstandes geformt worden ist;
(f) Erhöhens des Abstandes zwischen der Platte und der transparenten Trennschicht um die Dicke einer Schicht;
(g) Herbeiführens des Fließens der photoformbaren Zusammensetzung über die photogeformte Schicht, um eine neue Schicht der verformbaren Zusammensetzung zu bilden;
(h) Bildweisen Einwirkens von Strahlung auf den zwischen der transparenten Trennschicht und dem zuvor belichteten Querschnittsteil enthaltenen Teil der neuen Schicht der Zusammensetzung durch die Oberfläche der transparenten Trennschicht, der in Kontakt mit der photoformbaren Zusammensetzung steht, um einen neuen Unter-Teil photozuformen, mit der Anforderung, daß die Strahlung stark genug ist und die Ablöse-Eigenschaften der transparenten Trennschicht so beschaffen sind, daß das Haftvermögen zwischen dem neu photogeformten Unter-Teil und dem zuvor hergestellten Querschnittsteil größer als das zwischen dem Film und dem neu photogeformten Unter-Teil ist;
(i) Bewegens der transparenten Trennschicht auf eine Weise, auf die die Adhäsion zwischen der zweiten Oberfläche der Trennschicht und dem neu photogeformten Unter-Teil zerstört wird;
(j) Wiederholens der Schritte (h) und (i), bis ein Querschnittsteil des Gegenstandes geformt worden ist;
(k) Erhöhens des Abstandes zwischen der Platte und der transparenten Trennschicht um die Dicke einer Schicht;
(l) Herbeiführens des Fließens der photoformbaren Zusammensetzung über die photogeformte Schicht, um eine neue Schicht der verformbaren Zusammensetzung zu bilden, und
(m) Wiederholens der Schritte (h) bis (l), bis der integrale dreidimensionale Gegenstand geformt ist.

22. Verfahren nach Anspruch 21, wobei jedes photogeformte Unter-Teil einer einzigen photoabgebildeten Linie entspricht, jede photoabgebildete Linie mit wenigstens einer weiteren photoabgebildeten Linie verbunden ist, alle photogebildeten Linien eine gemeinsame Richtung aufweisen und parallel zueinander liegen.

23. Verfahren nach Anspruch 22, wobei die Oberflächen der transparenten Trennschicht eben und parallel zur Platte sind.

24. Verfahren nach Anspruch 23, wobei die Schritte (d) und (i) durch eine translatorische Bewegung der transparenten Trennschicht durchgeführt werden, wobei die translatorische Bewegung eine Richtung parallel zur Platte aufweist.

25. Verfahren nach Anspruch 24, wobei die Richtung der tranlatorischen Bewegung darüber hinaus parallel zur allgemeinen Richtung der photobelichteten Linien ist.

26. Verfahren nach Anspruch 24, wobei die translatorische Bewegung pulsierend ist.

27. Verfahren nach Anspruch 23, wobei die Schritte (d) und (i) durch eine zurückziehende Bewegung der transparenten Sperrschicht durchgeführt werden, wobei die zurückziehende Bewegung eine von der Platte wegzeigende Richtung hat.

28. Verfahren nach Anspruch 27, wobei die zurückziehende Bewegung pulsierend ist.

29. Verfahren nach Anspruch 27, wobei die Richtung der zurückziehenden Bewegung im wesentlichen senkrecht zur Platte ist.

30. Verfahren nach Anspruch 22, wobei die transparente Trennschicht eine gekrümmte Form aufweist.

31. Verfahren nach Anspruch 30, wobei die Schritte (d) und (i) durch eine rollende Bewegung der transparenten Trennschicht durchgeführt werden.

32. Verfahren nach Anspruch 31, wobei die rollende Bewegung eine Richtung parallel zur allgemeinen Richtung der photobelichteten Linien hat.

33. Verfahren nach Anspruch 22, wobei die Strahlung in Form eines Laserstrahls vorliegt.

34. Verfahren nach Anspruch 2, wobei die Strahlung durch eine Photomaske veränderlicher optischer Dichte modifiziert wird.

35. Verfahren nach Anspruch 22, wobei die photoformbare Zusammensetzung Plastisol umfaßt.

36. Vorrichtung zur Herstellung eines integralen dreidimensionalen Gegenstandes aus einer Vielzahl von Querschnittsteilen des Gegenstandes, wobei die Querschnittsteile photogeformte Unter-Teile einzelner Schichten einer verformbaren und photoformbaren Zusammensetzung sind, umfassend:
Mittel zum Abbilden, um auf jedes der Unter-Teile der photoformbaren Zusammensetzung bildweise Strahlung einwirken zu lassen, und
Beschichtungsvorrichtung, umfassend
die Zusammensetzung enthaltenden Behälter;
innerhalb des Behälters angeordnete Platte;
transparente Trennschicht, angeordnet oberhalb der Platte mit einem Abstand, der der Dicke einer Schicht entspricht, wobei die Trennschicht eine erste und eine zweite Oberfläche aufweist, die erste Oberfläche der zweiten Oberfläche gegenüber liegt, die Trennschicht dafür bestimmt ist, mit der Zusammensetzung auf eine Weise so handhabbar zu sein, daß das Benetzen der ersten Oberfläche durch die Zusammensetzung verhindert wird und ermöglicht, daß wenigstens ein Teil der zweiten Oberfläche in Kontakt mit der Zusammensetzung steht;
Mittel zur Bewegung, um die transparente Trennschicht kontrollierbar relativ zur Platte bewegen zu können, und
Einstellungs-Mittel zur kontrollierbaren Änderung des Abstands zwischen der zweiten Oberfläche der Trennschicht und der Platte, um zu ermöglichen, daß die einzelnen Schichten der photofombaren Zusammensetzung unter der zweiten Oberfläche geformt und durch bildweises Einwirken von durch das Mittel zur Abbildung erzeugter Strahlung auf die Unter-Teile photogeformt werden.

37. Vorrichtung nach Anspruch 36, wobei das Mittel zum Abbilden umfaßt:
Mittel zur Bestrahlung, um einen Bestrahlungs-Strahl zu erzeugen, wobei der Bestrahlungs-Strahl eine Intensität aufweist;
Mittel zur Ablenkung, um den Bestrahlungs-Strahl kontrollierbar abzulenken;
Mittel zur Modulation, angeordnet zwischen dem Mittel zur Bestrahlung und dem Mittel zur Ablenkung, um die Intensität des Bestrahlungs-Strahls zu modulieren; und
Mittel zum Rechnen, um der Form des starren Gegenstandes entsprechende grafische Daten zu speichern, wobei das Mittel zum Rechnen auch mit dem Mittel zur Modulation, dem Mittel zur Ablenkung, dem Mittel zur Bewegung und dem Mittel zur Einstellung gekoppelt ist, um das Mittel zur Modulation, das Mittel zur Ablenkung, das Mittel zum Spannen und das Mittel zur Einstellung in Einklang mit den grafischen Daten zu steuern.

38. Vorrichtung nach Anspruch 37, wobei der Bestrahlungs-Strahl einen Laserstrahl umfaßt.

39. Vorrichtung nach Anspruch 37, wobei die Strahlung durch eine Photoschablone variabler optischer Dichte verändert ist.

40. Vorrichtung nach Anspruch 36, wobei die photoformbare Zusammensetzung Plastisol umfaßt.

## Revendications

1. Un procédé de fabrication d'un objet tridimensionnel monobloc à partir d'une multiplicité de couches transversales de l'objet, les couches transversales de l'objet étant constituées de sous-couches photoformées de couches individuelles successives à partir d'une composition déformable et photoformable contenue dans une cuve comportant un support ou tablette, ledit procédé consistant à :
(a) placer une séparation transparente dans la composition, au-dessus du support, à une distance égale à l'épaisseur d'une couche;
(b) exposer, de façon à former une image, une sous-couche de la composition située entre la séparation et le support;
(c) déplacer la séparation transparente par rapport au support de manière à détruire l'adhérence entre la séparation et la sous-couche photoformée;
(d) réitérer les étapes (b) et (c) jusqu'à formation d'une couche transversale de l'objet;
(e) éloigner le support de la séparation transparente d'une distance égale à l'épaisseur d'une couche;
(f) réitérer les étapes (a) à (d) jusqu'à ce que l'objet tridimensionnel monobloc soit achevé.

2. Procédé selon la revendication 1, dans lequel chaque sous-couche photoformée correspond à une raie photoreproduite unique, chaque raie photoreproduite étant solidaire d'au moins une autre raie photoreproduite, toutes ces raies ayant une direction commune et étant parallèles.

3. Procédé selon la revendication 2, dans lequel la séparation comporte, de part et d'autre, 2 surfaces planes et parallèles au support.

4. Procédé selon la revendication 3 dans lequel l'étape (c) s'effectue par un mouvement de translation de la séparation transparente, ce mouvement de translation étant parallèle au support.

5. Procédé selon la revendication 4, dans lequel la direction du mouvement de translation est aussi parallèle à la direction générale des raies photoreproduites.

6. Procédé selon la revendication 4, dans lequel le mouvement de translation est saccadé.

7. Procédé selon la revendication 3, dans lequel l'étape (c) s'effectue en écartant la séparation transparente, dans une direction opposée au support.

8. Procédé selon la revendication 7, dans lequel le mouvement de retrait est saccadé.

9. Procédé selon la revendication 7, dans lequel la direction du mouvement de retrait est pratiquement perpendiculaire au support.

10. Procédé selon la revendication 2, dans lequel la séparation transparente présente une forme arquée.

11. Procédé selon la revendication 10, dans lequel l'étape (c) s'effectue par un mouvement de roulement de la séparation transparente.

12. Procédé selon la revendication 11, dans lequel le mouvement de roulement s'effectue dans une direction parallèle à la direction générale des raies photoreproduites.

13. Procédé selon la revendication 2, dans lequel la radiation est un faisceau laser.

14. Procédé selon la revendication 2, dans lequel la radiation est modifiée par un filtre de densité optique variable.

15. Procédé selon la revendication 2, dans lequel la composition photoformable renferme un plastisol.

16. Un poste amélioré de revêtement d'une installation comportant des moyens de formation d'images permettant la fabrication d'objets tridimensionnels monoblocs à partir d'une multiplicité de couches transversales de l'objet, les couches transversales étant constituées de sous-couches photoformées de couches individuelles d'une composition déformable et photoformable placée dans une cuve munie d'un support, dont l'amélioration consiste en:
une séparation transparente placée au-dessus du support à une distance réglable du support;
des moyens de déplacements contrôlés de la séparation transparente au voisinage du support et
des moyens de positionnement permettant de régler la distance entre la séparation et le support.

17. Un appareillage selon la revendication 16, dans lequel les moyens de reproduction comportent :
une source de radiation fournissant un faisceau radiant, ledit faisceau radiant ayant une certaine intensité;
un dispositif de déviation permettant de dévier de façon contrôlée le faisceau radiant;
un dispositif modulateur situé entre la source de radiation et le dispositif de déviation permettant de moduler l'intensité du faisceau radiant et
des moyens informatiques permettant de stocker des données graphiques correspondant à la forme de l'objet rigide, ces moyens informatiques étant associés au dispositif modulateur, au dispositif de déviation, au dispositif de déplacement et d'ajustement afin de contrôler lesdits dispositifs de modulation, de déviation, de positionnement et de placement, et ce en fonction des données graphiques.

18. Une installation selon la revendication 17, dans laquelle le faisceau radiant est un faisceau laser.

19. Une installation selon la revendication 17, dans laquelle la radiation est modifiée au moyen d'un filtre de densité optique variable.

20. Une installation selon la revendication 16, dans laquelle la composition photoformable renferme un plastisol.

21. Un procédé de fabrication d'un objet monobloc tridimensionnel à partir d'une multiplicité de couches transversales de l'objet, les couches transversales étant des sous-couches photoformées constituées de couches individuelles successives d'une composition déformable et photoformable comportant les étapes consistant à:
(a) placer la composition dans une cuve comportant un support;
(b) placer à l'intérieur de la composition au-dessus du support à une distance égale à l'épaisseur d'une couche, une séparation transparente possédant deux surfaces de part et d'autre, la première surface étant disposée de façon à ne pas être mouillée par la composition, et au moins une partie de la deuxième surface étant placée de telle façon qu'elle est en contact avec la composition;
(c) exposer de façon à former une image une partie d'une couche de la composition photoformable située entre la séparation transparente et le support à une radiation à travers la partie de la surface de la séparation transparente en contact avec la composition photoformable, de manière à photoformer une sous-section avec cette exigence que la radiation est suffisamment intense et les caractéristiques anti-adhésives de la séparation transparente sont telles que l'adhérence entre la sous-section photoformée et le support est supérieure à celle qui existe entre la seconde surface de la séparation et la sous-section photoformée;
(d) déplacer la séparation transparente par rapport au support de manière à détruire l'adhésion entre la seconde surface de la séparation et la sous-section photoformée;
(e) répéter les étapes (c) et (d) jusqu'à ce que l'on ait formé une couche transversale de l'objet à fabriquer;
(f) augmenter la distance entre le support et la séparation transparente d'une distance correspondant à l'épaisseur d'une couche;
(g) amener la composition photoformable à s'écouler au-dessus de la couche photoformée de manière à constituer une nouvelle couche de composition déformable;
(h) exposer, de façon à former une image, une partie de la nouvelle couche de composition contenue entre la séparation transparente et la couche transversale déjà exposée à une radiation à travers la surface de la séparation transparente en contact avec la composition photoformable, afin de photoformer une nouvelle sous-section, avec cette condition que la radiation soit suffisamment intense et que les caractéristiques d'adhérence de la séparation transparente soient telles que l'adhérence entre la sous-section nouvellement photoformée et la couche transversale déjà précédemment constituée est supérieure à celle qui existe entre le film et la nouvelle sous-section fraîchement photoformée;
(i) déplacer la séparation transparente de manière à briser l'adhésion entre la seconde surface de la séparation et la sous-couche nouvellement photoformée;
(j) réitérer les étapes (h) et (i) jusqu'à ce que l'on ait formé une couche transversale de l'objet à fabriquer;
(k) augmenter la distance entre le support et la séparation transparente d'une distance correspondant à l'épaisseur d'une couche;
(l) faire couler la composition photoformable au-dessus de la couche photoformée de manière à former une nouvelle couche de composition déformable; et
(m) réitérer les étapes (h) à (l) jusqu'à ce que l'on ait terminé l'élaboration de l'objet tridimensionnel monobloc.

22. Un procédé selon la revendication 21, dans lequel chaque sous-couche photoformée correspond à une seuel raie photoreproduite, chaque raie photoreproduite étant solidaire d'au moins une autre raie photoreproduite, toutes les raies photoreproduites ayant une direction commune et étant parallèles les unes aux autres.

23. Procédé selon la revendication 22, dans lequel les surfaces de la séparation transparente sont planes et parallèles au support.

24. Procédé selon la revendication 23, dans laquelle les étapes (d) et (i) sont effectuées par un déplacement en translation de la séparation transparente, ce déplacement en translation étant effectué dans une direction parallèle au support.

25. Procédé selon la revendication 24, dans lequel la direction du mouvement de translation est également parallèle à la direction commune des cordons photoreproduits.

26. Procédé selon la revendication 24, dans lequel le mouvement de translation est saccadé.

27. Procédé selon la revendication 23, dans lequel les étapes (d) et (i) sont effectuées par un mouvement de retrait de la séparation transparente, le mouvement de retrait étant orienté dans une direction opposée au support.

28. Procédé selon la revendication 27, dans lequel le mouvement de retrait est saccadé.

29. Procédé selon la revendication 27, dans lequel la direction du mouvement de retrait est pratiquement perpendiculaire au support.

30. Procédé selon la revendication 22, dans lequel la séparation transparente présente une forme arquée.

31. Procédé selon la revendication 30, dans lequel les étapes (d) et (i) sont effectuées par un mouvement de roulement de la séparation transparente.

32. Procédé selon la revendication 31, dans lequel le mouvement de roulement a une direction parallèle à la direction commune des cordons photoreproduits.

33. Procédé selon la revendication 22, dans lequel la radiation est un faisceau laser.

34. Procédé selon la revendication 2, dans lequel la radiation est modifiée par un filtre de densité optique variable.

35. Procédé selon la revendication 22, dans lequel la composition photoformable renferme un plastisol.

36. Une installation pour la fabrication d'un objet tridimensionnel monobloc à partir d'une multiplicité de couches transversales de l'objet, les couches transversales de l'objet étant constituées de sous-sections photoformées de couches individuelles d'une composition déformable et photoformable comportant des moyens de reproduction pour exposer, de façon à former une image, chacune des sous-sections de la composition photoformable à une radiation, et
un poste de revêtement comportant
une cuve renfermant la composition,
un support situé à l'intérieur de la cuve,
une séparation transparente placée au-dessus du support à une distance égale à une épaisseur d'une couche, la séparation transparente ayant deux surfaces de part et d'autre, la séparation étant mobile à l'intérieur de la composition de telle façon que la première surface ne soit pas mouillée par la composition, et de façon qu'une partie au moins de la seconde surface soit en contact avec la composition;
un dispositif permettant de déplacer de façon contrôlée la séparation transparente par rapport au support, et
des moyens de réglage permettant de faire varier à volonté la distance entre la seconde surface de la séparation et le support de manière que puissent se former de nouvelles couches de composition photoformable sous cette seconde surface destinées à être photoformées par exposition de façon à former une image des sous-couches à l'irradiation issue de la source de radiation.

37. Une installation selon la revendication 36, dans laquelle les moyens de reproduction comportent une source de radiation fournissant un faisceau radiant d'une certaine intensité, un dispositif de déviation permettant de dévier de manière contrôlée le faisceau radiant, des dispositifs de modulation placés entre la source de radiation et le dispositif de déviation permettant de moduler l'intensité du faisceau radiant et des moyens informatiques permettant de stocker des données graphiques correspondant à la forme de l'objet rigide, ces moyens informatiques étant également associés aux dispositifs de modulation, de déviation, de déplacement et de positionnement de manière à contrôler lesdits moyens de modulation, de déviation, de déplacement et de positionnement selon les données graphiques.

38. Une installation selon la revendication 37, dans laquelle le faisceau radiant est un faisceau laser.

39. Une installation selon la revendication 37, dans laquelle la radiation est modifiée par un filtre de densité optique variable.

40. Une installation selon la revendication 36, dans laquelle la composition photoformable renferme un plastisol.
